# EUROPÄISCHE PATENTSCHRIFT

(11) **EP 1 270 309 B1**
(45) Veröffentlichungstag und Bekanntmachung des Hinweises auf die Patenterteilung: **12.09.2012**
(21) Anmeldenummer: 01115868.0
(22) Anmeldetag: 29.06.2001
(51) Int. Cl.: B60L 3/00, B60L 11/18

(54) **Vorrichtung und Verfahren zur elektrischen Energieversorgung eines Elektrofahrzeuges**
Device and method for supplying an electrical vehicle with electrical energy
Dispositif et méthode d'alimentation en énergie électrique d'un véhicule électrique

(43) Veröffentlichungstag der Anmeldung: 02.01.2003
(73) Patentinhaber: Ford Global Technologies, LLC, Dearborn, MI 48126 (US)
(72) Erfinder: Gussen, Uwe, 52393 Huertgenwald (DE); Busch, Rainer, 52076 Aachen (DE); Schmitz, Peter, 52076 Aachen (DE)
(74) Vertreter: Drömer, Hans-Carsten

(56) Entgegenhaltungen:
- EP-A- 0 638 458
- EP-A- 0 980 793
- US-A- 5 238 083

## Beschreibung

Die Erfindung betrifft eine elektrische Energieversorgungsanordnung für ein Kraftfahrzeug, enthaltend zwei Außenanschlüsse zur Bereitstellung einer Spannung aus einer Spannungsquelle, wobei zwischen einem ersten der Außenanschlüsse und der Spannungsquelle ein Unterbrechungsschalter angeordnet ist. Ferner betrifft die Erfindung ein Elektrofahrzeug enthaltend einen elektrischen Antriebsmotor mit einer Motorregelung sowie ein Verfahren zum Abtrennen einer aus mehreren in Serie geschalteten Batterien bestehenden Energieversorgungsanordnung.

Kraftfahrzeuge müssen in der Regel zur Versorgung der elektrischen Verbraucher eine Energieversorgungsanordnung enthalten. Dies gilt insbesondere für Elektrofahrzeuge, die als sogenannte hybride Fahrzeuge eine Brennkraftmaschine und einen Elektromotor bzw. als reine Elektrofahrzeuge allein einen Elektromotor für den Antrieb verwenden. Derartige, zumindest teilweise elektrisch angetriebene Elektrofahrzeuge erfordern eine Hochleistungs-Energieversorgung, die entsprechend hohe Leistungen beziehungsweise Stromstärken zur Verfügung stellen kann. Aufgrund ihrer Verwendung für den Fahrzeugantrieb werden derartige Energieversorgungsantriebe auch als Traktionsbatterien bezeichnet.

Beim An- und Abkoppeln eines elektrischen Verbrauchers an eine elektrische Energieversorgungsanordnung sind bestimmte Sicherheitsmaßnahmen zur Vermeidung von Schäden erforderlich. Diese Sicherheitsmaßnahmen können zum einen dem Schutz der elektrischen Systeme vor zerstörerischen Spannungsverhältnissen dienen. Zum anderen ist jedoch auch die Sicherheit im Falle einer Ausnahmesituation wie etwa eines Unfalles zu beachten, wobei es hier insbesondere darauf ankommt, eine Funkenbildung zu vermeiden, welche zur Entzündung ausgetretenen Kraftstoffes führen könnte. Zur Erreichung des letztgenannten Zieles ist aus der WO 99/65046 ein elektromechanischer Unterbrechungsschalter bekannt, welcher an einem Pol einer Kraftfahrzeugbatterie angeklemmt werden kann und diesen Pol einerseits mit der Lichtmaschine und andererseits mit dem Bordnetz für sonstige elektrische Verbraucher verbindet. Dabei kann die Verbindung zur Lichtmaschine über einen Sensor gesteuert zum Beispiel bei einem Unfall unterbrochen werden, so dass eine hiervon ausgehende Gefahr ausgeschlossen wird, während gleichzeitig die Funktion "ungefährlicher" elektrischer Verbraucher aufrecht erhalten bleiben kann.

Ein ähnliches System ist auch aus der US 5 818 122 bekannt, wobei im Falle eines Unfalles nur ein primärer Stromkreis unterbrochen wird, während die Funktion sonstiger Systeme aufrecht erhalten bleibt. Die bekannten Systeme berücksichtigen jedoch nicht die bei elektrisch angetriebenen Fahrzeugen typischerweise vorliegende Situation, dass die Energieversorgungsanordnung aus mindestens zwei räumlich voneinander getrennten Batterien besteht, aus denen eine hohe Leistung entnommen wird.

Aus der als nächstkommender Stand der Technik anzusehenden EP 0 638 458A1 ist ein elektrisches System eines Elektrofahrzeugs bekannt, das zur Bereitstellung einer DC-Spannung eine Spannungsquelle mit zwei Außenanschlüssen aufweist. Die Spannungsquelle besteht aus zwei in Serie geschalteten Batterien. Zwischen den Außenanschlüssen und den Batterien sind jeweils Unterbrechungsschalter vorgesehen, die jeweils eine Sprengladung zur Unterbrechung der elektrischen Leitungen enthalten. Nachdem im Falle eines Unfalls über ein Zündsignal die Sprengladungen gezündet worden sind, werden daher praktische alle Teile der elektrischen Leitungen spannungsfrei, wodurch auch bei einem Kontakt mit elektrischen Leitungen beim Durchtrennen der Karosserie kein Feuer entstehen kann.

Die US 52 38 083 offenbart eine elektrische Versorgungseinrichtung für ein Elektrofahrzeug, welche eine Spannungsquelle mit einer Mehrzahl von Batterien umfasst. Zur Versorgung des Antriebsmotors über einen Hochspannungsstromkreis werden die Batterien in Serie geschaltet. Gleichzeitig versorgt eine einzelne Batterie einen Niederspannungsstromkreis, der zum Betätigen der Verbindungsschalter dient. Ist der Niederspannungsstromkreis geschlossen, sind die Magnetspulen der Verbindungsschalter aktiv und stellen eine Serienschaltung der Batterien zur Hochspannungsversorgung des Antriebsmotors her. Wird der Niederspannungsstromkreis aufgrund eines Signals eines Aufprallsensors über einen Schalter oder über einen Hauptschalter geöffnet, so wird auch die Verbindung der Gruppen von Batterien untereinander unterbrochen; die maximal noch anliegende Spannung ist dann die einer Gruppe von Batterien, beispielsweise 24V. Entsprechend Varianten einer solchen Anordnung steht auch nach einem Aufprall eine verringerte Spannung für den Antriebsmotor zur Verfügung oder es ist eine Betriebszustandsanzeige vorgesehen oder es wird je nach Schwere eines Aufpralls eine unterschiedlich hohe Antriebsspannung zur Verfügung gestellt.

Vor diesem Hintergrund war es Aufgabe der vorliegenden Erfindung, eine Vorrichtung und ein Verfahren zur Sicherung der elektrischen Energieversorgung in einem Fahrzeug, insbesondere in einem Fahrzeug mit elektrischem Antrieb, bereitzustellen.

Diese Aufgabe wird durch eine elektrische Energieversorgungsanordnung mit den Merkmalen des Patentanspruchs 1, durch ein Elektrofahrzeug mit den Merkmalen des Patentanspruchs 4 sowie durch ein Verfahren zum Abtrennen einer Energieversorgungsanordnung mit den Merkmalen des Patentanspruchs 8 gelöst. Vorteilhafte Ausgestaltungen sind in den Unteransprüchen enthalten.

Die elektrische Energieversorgungsanordnung für ein Kraftfahrzeug, die insbesondere für ein zumindest teilweise elektrisch angetriebenes Kraftfahrzeug geeignet ist, enthält zwei Außenanschlüsse (Pole) zur Bereitstellung einer Spannung aus einer Spannungsquelle an einen Verbraucher, wobei zwischen einem ersten der beiden Außenanschlüsse und der Spannungsquelle ein Unterbrechungsschalter angeordnet ist. Die Spannungsquelle besteht aus mindestens zwei in Serie geschalteten Batterien, und zwischen den Batterien und/oder zwischen dem zweiten der beiden Außenanschlüsse und den Batterien ist mindestens ein weiterer Unterbrechungsschalter angeordnet. Die Energieversorgungsanordnung ist dadurch gekennzeichnet, dass diese zusätzlich zu den bereits vorhandenen Außenanschlüssen zwei weitere Außenanschlüsse aufweist, zwischen denen die Batterien der Energieversorgungsanordnung ohne Zwischenschaltung von Unterbrechungsschaltern in Serie geschaltet sind. An den weiteren zwei Außenanschlüssen kann somit ständig Spannung von den Batterien abgegriffen werden, so dass sich diese Anschlüsse insbesondere zur Versorgung von Verbrauchern eignen, deren Funktion auch in einem Ausnahmefalle aufrecht erhalten werden soll. Typischerweise sind dies Verbraucher, die nicht dem elektrischen Antrieb des Fahrzeugs dienen und daher nur eine geringe Leistung benötigen.

Durch die Verwendung von mindestens zwei Batterien, die vorzugsweise räumlich getrennt im Fahrzeug angeordnet sind, ist die genannte Energieversorgungsanordnung besonders geeignet für die Bereitstellung hoher Leistungen, wie sie typischerweise für einen elektrischen Antrieb erforderlich sind. Die Sicherheit eines derartigen Systems wird im Falle der An- und Abkopplung sowie in einer Ausnahmesituation (Unfall) durch mehrere Unterbrechungsschalter gewährleistet. Dabei sorgen zwischen den Außenanschlüssen und den Batterien angeordnete Unterbrechungsschalter für eine Abtrennung der im Fahrzeug verteilten Verbraucher von der Energieversorgung. Darüber hinaus können auch die Verbindungen, welche die Batterien untereinander in Reihe schalten, durch Unterbrechungsschalter getrennt werden. Dies stellt sicher, dass auch von diesen Verbindungsleitungen etwa bei einem Unfall keine Gefahr durch Funkenflug oder dergleichen ausgehen kann.

Gemäß einer Weiterbildung der Energieversorgungsanordnung enthält diese mi n-destens drei Batterien, wobei die erste Batterie im Motorraum, die zweite Batterie vor der Hinterachse des Kraftfahrzeugs und die dritte Batterie hinter der Hinterachse des Kraftfahrzeugs angeordnet ist. Insbesondere bei elektrisch angetriebenen Kraftfahrzeugen werden zur Bereitstellung der notwendigen hohen Leistung mehrere Batterien vorgesehen, wobei diese unter anderem aus statischen Gründen im Kraftfahrzeug verteilt angeordnet werden. Bei einer derartigen verteilten Unterbringung der Energieversorgungsanordnung im Fahrzeug müssen zwangsläufig über größere Strecken durch das Fahrzeug verlaufende Verbindungsleitungen zwischen den Batterien verlegt werden. Bei diesen langen Verbindungsleitungen macht sich die vorgeschlagene Ausgestaltung der Energieversorgungsanordnung unter Sicherheitsaspekten besonders positiv bemerkbar, da die Verbindungsleitungen durch die Betätigung von darin angeordneten Unterbrechungsschaltern spannungslos geschaltet werden können.

Bei der zuletzt genannten Aufteilung der Energieversorgungsanordnung auf mindestens drei Batterien werden die Batterien vorzugsweise in der Reihenfolge erste Batterie (im Motorraum), dritte Batterie (hinter der Hinterachse) und zweite Batterie (zwischen erster und dritter Batterie) in Serie geschaltet, wodurch die maximale Länge einer durchgehenden Anschlussleitung begrenzt werden kann. Ferner werden bei dieser Konstellation vorzugsweise ein Unterbrechungsschalter zwischen dem ersten Außenanschluss und der ersten Batterie, ein Unterbrechungsschalter zwischen dem zweiten Außenanschluss und der zweiten Batterie sowie zwei Unterbrechungsschalter in der Verbindung zwischen der ersten und der dritten Batterie angeordnet. Die zuletzt genannten Unterbrechungsschalter sind dabei jeweils in Nähe der ersten beziehungsweise dritten Batterie angeordnet, so dass durch ihr Öffnen die Verbindungsleitung praktisch auf ihrer gesamten Länge spannungslos geschaltet werden kann.

Die Erfindung betrifft weiterhin ein Elektrofahrzeug, welches einen elektrischen Antriebsmotor mit einer Motorregelung enthält, wobei die Motorregelung dem Antriebsmotor je nach Fahrsituation und Bedarf elektrische Energie zuführt. Insbesondere kann die Motorregelung auch eine Umwandlung von Gleichspannung in Wechselspannung vornehmen. Das Elektrofahrzeug ist dadurch gekennzeichnet, dass die Motorregelung an eine Energieversorgungsanordnung der vorstehend erläuterten Art angeschlossen ist. Das heißt, dass die Energieversorgungsanordnung mindestens zwei Batterien enthält und dass zwischen diesen Batterien und/oder zwischen den Batterien und den Außenanschlüssen der Energieversorgungsanordnung, die mit der Motorregelung gekoppelt sind, Unterbrechungsschalter angeordnet sind. Wie bereits erläutert, ist gerade bei der hohen Leistungsentnahme eines Elektrofahrzeugs die Sicherheit der Energieversorgung besonders relevant. Diesen Sicherheitsanforderungen genügt das dargestellte Elektrofahrzeug, da eine separate Abkopplung der Batterien untereinander ermöglicht wird.

Vorzugsweise weist das Elektrofahrzeug eine Abschalteinheit auf, welche mit der Motorregelung und den Unterbrechungsschaltern der Energieversorgungsanordnung verbunden und derart eingerichtet ist, dass diese nach ihrem Auslösen zunächst die Motorregelung veranlasst, die Stromentnahme aus der Energieversorgungsanordnung zu reduzieren, und dass sie anschließend die Unterbrechungsschalter der Energieversorgungsanordnung öffnet. Eine derartige Abschalteinheit kann insbesondere auf das Abstellen des Kraftfahrzeugs (Entnahme des Zündschlüssels) reagieren, welches regelmäßig am Ende einer Benutzung des Fahrzeuges stattfindet. Darüber hinaus kann jedoch auch auf Ausnahmesituationen wie etwa einen Unfall reagiert werden. Dabei wird zunächst durch Ansteuern der Motorregelung versucht, die Stromentnahme so weit wie möglich zu reduzieren beziehungsweise bereits ganz auf Null zurückzufahren, um den Stromfluss in den Leitungen so klein wie möglich einzustellen. Wenn eine solche Reduktion des Stromflusses versucht worden ist, werden dann die Unterbrechungsschalter geöffnet, wobei diese Unterbrechung aufgrund der bereits reduzierten Ströme unter erleichterten Bedingungen (insbesondere hinsichtlich der Funkenbildung) erfolgen kann.

Gemäß einer Weiterbildung der Erfindung kann die Abschalteinheit darüber hinaus so eingerichtet sein, dass diese zunächst einen zwischen einem Außenanschluss der Energieversorgungsanordnung und der Spannungsquelle der Energieversorgungsanordnung befindlichen Unterbrechungsschalter öffnet, und dass diese anschließend die restlichen Unterbrechungsschalter der Energieversorgungsanordnung öffnet. Durch diese Reihenfolge des Öffnens der Unterbrechungsschalter kann sichergestellt werden, dass beim Öffnen der Schalter keine Konstellationen entstehen, die zu Schäden der Energieversorgungsanordnung oder der Verbraucher führen könnten.

Gemäß einer bevorzugten Ausgestaltung der Abschalteinheit kann diese einen Trägheitsschalter aufweisen, welcher mit der Motorregelung und der Eingangsseite eines ersten Relais gekoppelt und derart eingerichtet ist, dass dieser beim Auftreten einer oberhalb einer vorgegebenen Schwelle liegenden Beschleunigung einen Stromkreis öffnet und hierdurch ein Signal an die Motorregelung sendet sowie zeitverzögert das erste Relais öffnet. Das erste Relais ist ausgangsseitig derart mit einem ersten Unterbrechungsschalter der Energieversorgungsanordnung sowie der Eingangsseite eines zweiten Relais gekoppelt, dass das Öffnen des ersten Relais den genannten ersten Unterbrechungsschalter sowie zeitverzögert das zweite Relais öffnet. Das zweite Relais ist ausgangsseitig mit den übrigen Unterbrechungsschalter der Energieversorgungsanordnung gekoppelt und derart eingerichtet, dass das Öffnen des Relais die Öffnung der genannten Unterbrechungsschalter bewirkt. Durch eine derartige Ausgestaltung der Abschalteinheit mit einem Trägheitsschalter und zwei gekoppelten Relais ist es möglich, einen Unfall aufgrund der damit verbundenen hohen Bremsbeschleunigungen zu detektieren und als Reaktion hierauf in zeitlicher Reihenfolge erst die Motorregelung, dann einen ersten Unterbrechungsschalter und zum Schluss die übrigen Unterbrechungsschalter anzusteuern. Die Einhaltung dieses zeitlichen Ablaufes ist dabei durch die Hardware festgelegt und somit störungssicherer als eine rein programmgesteuerte (Software-) Ausführung.

Die Erfindung betrifft schließlich auch ein Verfahren zum Abtrennen einer aus mehreren in Serie geschalteten Batterien bestehenden Energieversorgungsanordnung für ein Kraftfahrzeug, welches dadurch gekennzeichnet ist, dass zunächst die Verbindung zwischen einem Außenanschluss der Energieversorgungsanordnung und einer ersten Batterie geöffnet wird, und dass zeitverzögert weitere Verbindungen in der Serienschaltung der Batterien geöffnet werden. Bei einem derartigen Verfahren ist sichergestellt, dass zunächst die Verbindung der Energieversorgungsanordnung nach außen getrennt wird, bevor innerhalb der Energieversorgungsanordnung (zwischen den Batterien) Schaltvorgänge vorgenommen werden. Da sich ein völlig gleichzeitiges Öffnen von Schaltern niemals realisieren lässt, wird durch die Vorgabe der genannten Reihenfolge sichergestellt, dass beim Öffnen aller Unterbrechungsschalter keine unerwünschte oder schädigende Konfiguration auftreten kann.

Im Folgenden wird die Erfindung anhand der Figuren beispielhaft näher erläutert.
Es zeigen:
- Fig. 1: eine schematische Darstellung der Komponenten eines Kraftfahrzeugs mit einer erfindungsgemäßen Energieversorgungsanordnung; und
- Fig. 2: eine schematische Darstellung des Aufbaus einer Abschalteinheit für die Energieversorgungsanordnung gemäß Figur 1.

Das in den Figuren dargestellte Ausführungsbeispiel betrifft ein Elektrofahrzeug mit einem elektrischen Motor 2, welcher die Antriebsräder 1 des Fahrzeugs antreibt. Der Motor 2 wird von einer Motorregelung 3 mit einer geeigneten Wechselspannung (AC) versorgt. Die Motorregelung 3 entnimmt ihrerseits die benötigte elektrische Energie als Gleichspannung (DC) einer Energieversorgungsanordnung 14, welche in der nachfolgend näher erläuterten erfindungsgemäßen Weise ausgestaltet ist. Anstelle des alleinigen Antriebs über den Elektromotor 2 könnte auch in einer hybriden Konstellation der Elektromotor mit einer Brennkraftmaschine zusammen den Antrieb des Kraftfahrzeugs bewirken.

Die Energieversorgungsanordnung 14 enthält drei Batterien 5a, 5b, 5c, bei denen es sich insbesondere um spezielle Lithium-lonen-Hochleistungsbatterien handeln kann. Aufgrund ihrer Größe und ihres Gewichtes sind derartige Batterien typischerweise verteilt im Fahrzeug untergebracht. So befindet sich die erste Batterie 5a zusammen mit dem Elektromotor 1 und der Motorregelung 3 im Motorraum, die zweite Batterie 5b ist unmittelbar vor der Hinterachse 13 und die dritte Batterie 5c hinter der Hinterachse 13 des Fahrzeugs. Typischerweise sind die Batterien dabei in sogenannten Batterietrögen untergebracht. Die räumlich verteilte Anordnung der Batterien bedingt, dass diese über eine ausgedehnte Verkabelung in einer Serienschaltung miteinander verbunden werden müssen, wobei an zwei zur Motorregelung 3 führenden Außenanschlüssen 4a, 4b die Gleichspannung der in Reihe geschalteten Batterien zur Verfügung gestellt wird.

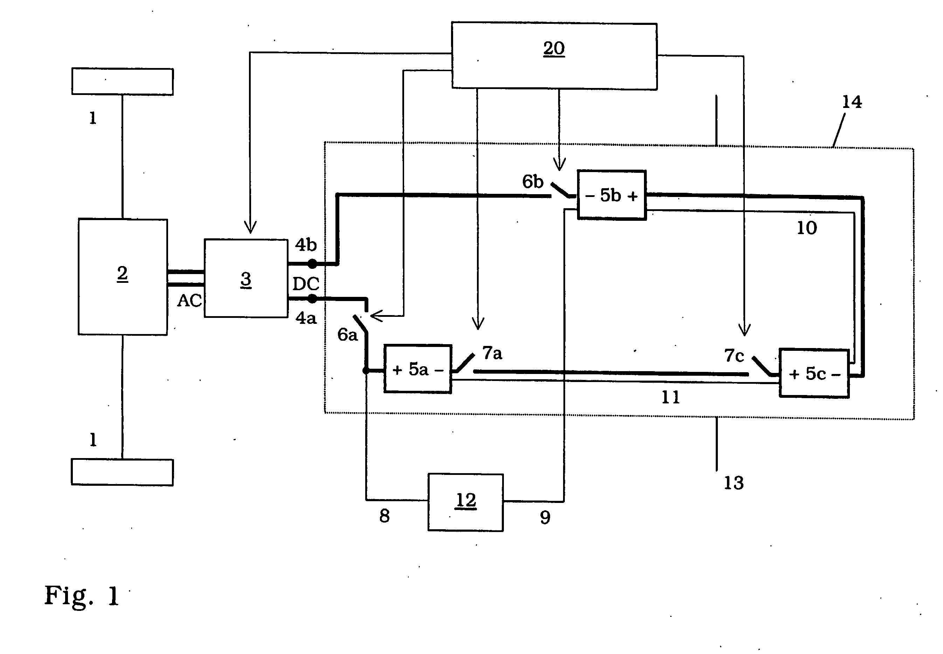

Aus Sicherheitsgründen müssen die einzelnen Batterien vom Fahrzeug abgekoppelt werden, wenn dieses ausgeschaltet ist (Zündschlüssel abgezogen) oder wenn eine Ausnahmesituation wie etwa ein Unfall auftritt. Um dies zu gewährleisten, sind Hochleistungs-Unterbrechungsschalter an den in Figur 1 dargestellten Stellen in die Verbindungsleitungen zwischen den Batterien und zu den Außenanschlüssen eingefügt. Insbesondere befindet sich ein Unterbrechungsschalter 6a zwischen einem ersten Außenanschluss 4a und der ersten Batterie 5a, ein Unterbrechungsschalter 7a in der Nähe der ersten Batterie 5a in der Verbindungsleitung zwischen der ersten Batterie 5a und der dritten Batterie 5c, ein weiterer Unterbrechungsschalter 7c in der Nähe der dritten Batterie 5c in der bereits erwähnten Verbindungsleitung zwischen der ersten Batterie 5a und der dritten Batterie 5c, sowie ein dritter Unterbrechungsschalter 6b in der Nähe der zweiten Batterie 5b in der Leitung zwischen dieser zweiten Batterie 5b und dem zweiten Außenanschluss 4b.

Wenn alle genannten Unterbrechungsschalter 6a, 6b, 7a, 7c geöffnet sind, ist eine Gefährdung durch stromführende Leiter in dem Fahrzeug so gut wie ausgeschlossen. Insbesondere sind die mit der Motorregelung und dem Motor verbundenen Außenanschlüsse 4a, 4b völlig von der Energieversorgungsanordnung 14 abgetrennt. Darüber hinaus ist gewährleistet, dass die sich über größere Strecken durch das Fahrzeug erstreckende Verbindungsleitung zwischen der ersten Batterie 5a und der dritten Batterie 5c an beiden Enden durch die Unterbrechungsschalter 7a, 7c von den Batterien abgekoppelt ist. In der Verbindungsleitung zwischen der dritten Batterie 5c und der zweiten Batterie 5b kann dagegen auf einen Unterbrechungsschalter verzichtet werden, da die Länge dieser Leitung verhältnismäßig kurz ist und somit das Risiko einer gefährlichen Störung in dieser Leitung vernachlässigt werden kann. Die Einsparung von Unterbrechungsschaltern in dieser Leitung reduziert den Steuerungsaufwand, den Leistungsverbrauch und die Installationskosten entsprechend. Wenn derartige Aspekte eine geringere Rolle spielen, kann jedoch auch in der Verbindung zwischen den Batterien 5c und 5b mindestens ein Unterbrechungsschalter angeordnet werden.

Neben den bisher beschriebenen "Hochleistungs-Verbindungsleitungen" der Batterien 5a, 5b, 5c zur Motorregelung 3 (fett in Figur 1) gibt es noch ein zweites Leitungssystem oder einen "Kleinleistungsbus", welcher einen Hochspannungszugriff auf die Batterien 5a, 5b, 5c für ein Bordnetz 12 bereitstellt. Dieser Kleinleistungsbus umfasst eine Serienschaltung der Batterien 5a, 5c und 5b über die entsprechenden Busleitungen 8, 9, 10 und 11. Die genannten Leitungen haben einen verhältnismäßig kleinen Durchmesser, da hierüber typischerweise maximal 50 mA entnommen werden, wohingegen über die Hochleistungs-Leitungen bis zu 300 A entnommen werden können. In den Leitungen des Kleinleistungsbusses sind keine Unterbrechungsschalter erforderlich, da hiervon in Ausnahmesituationen keine Gefahr ausgehen kann.

Während einer Fahrt des Fahrzeugs sind alle Unterbrechungsschalter 6a, 6b, 7a, 7c geschlossen, so dass von der Motorregelung 3 Strom aus der Energieversorgungsanordnung 14 entnommen werden kann. Dieser Stromfluss muss im Falle eines Unfalls unterbrochen werden, um die Gefahr durch stromführende Leitungen innerhalb des Fahrzeugs, die zum Beispiel zu einer Funkenbildung und damit zur Kraftstoffentzündung führen könnten, auszuschließen. Eine solche Abkopplung der Energieversorgung 14 ist grundsätzlich durch Öffnen aller Unterbrechungsschalter 6a, 6b, 7a, 7c möglich. Allerdings ist zu beachten, dass in der Praxis die Unterbrechungsschalter nicht alle gleichzeitig geöffnet werden können, da es immer zu zufälligen und nicht vorhersagbaren Zeitverzögerungen kommen kann. Wenn daher versucht würde, alle Unterbrechungsschalter gleichzeitig zum Öffnen zu veranlassen, könnte zum Beispiel eine Zwischensituation auftreten, in welcher die Unterbrechungsschalter 6a und 6b noch geschlossen sind, während die Unterbrechungsschalter 7a und 7c bereits geöffnet haben. In einer derartigen Situation würde ein Stromfluss über das Kabel 11 des Kleinleistungsbusses erzwungen, was zu einer Zerstörung dieses Kabels führen würde.

Um derartige Situationen zu vermeiden, wird erfindungsgemäß die Einhaltung der folgenden Reihenfolge bei einer Abkopplung der Energieversorgungsanordnung 14 vorgeschlagen:
i. Zunächst wird im Falle eines Unfalls der Motorregelung 3 Gelegenheit gegeben, die Stromentnahme so weit wie möglich zu reduzieren.
ii. Sodann wird eine vorgegebene Zeitdauer nach Detektion des Unfalls der Haupt-Unterbrechungsschalter 6a geöffnet, so dass der Stromkreis der Batterien 5a, 5b, 5c nach außen hin unterbrochen ist.
iii. Zuletzt werden die übrigen Unterbrechungsschalter 7a, 7c und 6b geöffnet, um sämtliche Verbindungen der Batterien 5a, 5b, 5c zum Fahrzeug zu unterbrechen.

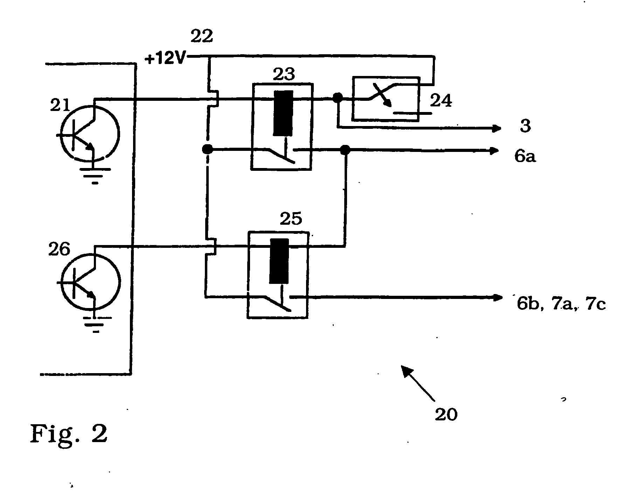

Die genannte Reihenfolge der Abkopplung der Energieversorgung vom Fahrzeug wird von einer Abschalteinheit 20 vorzugsweise redundant sichergestellt, um größtmögliche Ausfallsicherheit zu gewährleisten. Insbesondere kann die Abschaltsequenz einerseits durch Softwaresteuerung und andererseits durch eine Hardwareschaltung erzielt werden. Bei einer möglichen Abschalteinheit 20 gemäß Figur 2 ist die Eingangsseite eines ersten Relais 23 einerseits über einen Trägheitsschalter 24 mit einer Versorgungsspannung 22 (12 Volt) und andererseits über einen Transistor 21 mit Masse verbunden. Im normalen geschlossenen Zustand des Trägheitsschalters 24 findet somit ein Stromfluss durch die Primärseite des Relais 23 statt, wodurch dieses Relais ausgangsseitig eine Stromverbindung zwischen der Versorgungsspannung 22 und den Spulen des Haupt-Unterbrechungsschalters 6a herstellt, was zu einem Schließen des Haupt-Unterbrechungsschalters 6a führt.

Weiterhin ist bei geschlossenem Ausgangskreis des ersten Relais 23 der Eingangskreis eines zweiten Relais 25 einerseits an die Versorgungsspannung 22 angeschlossen und andererseits über einen Transistor 26 mit Masse verbunden. Auch das zweite Relais 25 befindet sich somit im aktivierten Zustand, in welchem es in seinem Ausgangskreis eine Verbindung der Spulen in den Unterbrechungsschaltern 6b, 7a und 7c zur Spannungsversorgung 22 schließt. Auch diese Unterbrechungsschalter befinden sich daher in einem geschlossenen Zustand.

Der Trägheitsschalter 24 öffnet, wenn er das Überschreiten einer bestimmten Bremsbeschleunigung feststellt. Derartige Schalter sind typischerweise Bestandteil von Kraftfahrzeugen, um die Kraftstoffpumpe bei einem Unfall abzuschalten. Wenn der Trägheitsschalter 24 sich öffnet, wird hierdurch die Verbindung der Motorregelung 3 zur Versorgungsspannung 22 sofort unterbrochen. Die Motorregelung 3 versucht daraufhin, die Stromentnahme aus der Energieversorgungsanordnung 14 (Figur 1) auf Null zu reduzieren. Eine gewisse, durch die Systemeigenschaften vorgegebene Zeit später öffnet das erste Relais 23 seinen Ausgangskreis, da der Eingangskreis durch das Öffnen des Trägheitsschalters 24 stromlos geworden ist. Durch das Öffnen des ersten Relais 23 wird die Spule des Haupt-Unterbrechungsschalters 6a stromlos, woraufhin sich der Haupt-Unterbrechungsschalter 6a öffnet. Weiterhin führt das Öffnen des ersten Relais 23 zu einer Unterbrechung der Stromversorgung des Eingangskreises des zweiten Relais 25. Dies führt wiederum nach einer durch Systemparameter vorgegebenen Verzögerungszeit zu einem Öffnen des Ausgangskreises des zweiten Relais 25, wodurch die Stromversorgung der Spulen in den Unterbrechungsschaltern 6b, 7a und 7c unterbrochen wird. Als Reaktion hierauf öffnen sich dann die genannten Unterbrechungsschalter.

Die Schaltung gemäß Figur 2 stellt somit eine Hardware-Lösung dar, welche bei einem Unfall in gewünschter Weise in zeitlich vorgegebener Reihenfolge zunächst die Motorregelung ansteuert und dann nacheinander den Haupt-Unterbrechungsschalter 6a und die übrigen Unterbrechungsschalter 6b, 7a, 7c öffnet.

Vorzugsweise werden die erläuterten Wirkungen einer Öffnung des Trägheitsschalters 24 auch bei einem Ausschalten (Power-off) des Kraftfahrzeugs ausgelöst (etwa durch einen weiteren, nicht dargestellten Schalter zwischen der Spannungsversorgung 22 und dem ersten Relais 23). Durch die hierdurch ausgelöste Abschaltungssequenz werden die Batterien gegen transiente Stromimpulse geschützt und das Fahrzeug zum Beispiel für Servicearbeiten am Hochspannungssystem gesichert.

## Patentansprüche

1. Elektrische Energieversorgungsanordnung (14) für ein Kraftfahrzeug, enthaltend zwei Außenanschlüsse (4a, 4b) zur Bereitstellung einer Spannung (DC) aus einer Spannungsquelle, wobei zwischen einem ersten (4a) der Außenanschlüsse und der Spannungsquelle ein Unterbrechungsschalter (6a) angeordnet ist, wobei die Spannungsquelle aus mindestens zwei in Serie geschalteten Batterien (5a, 5b, 5c) besteht, und wobei zwischen den Batterien und/oder zwischen dem zweiten Außenanschluss (4b) und den Batterien mindestens ein weiterer Unterbrechungsschalter (6b, 7a, 7c) angeordnet ist,
**dadurch gekennzeichnet, dass** die Energieversorgungsanordnung (14) zwei weitere Außenanschlüsse (8, 9) aufweist, zwischen denen die Batterien (5a, 5b, 5c) ohne Unterbrechungsschalter in Serie geschaltet sind.

2. Energieversorgungsanordnung nach Anspruch 1,
**dadurch gekennzeichnet, dass** diese drei Batterien (5a, 5b, 5c) aufweist, wobei die erste Batterie (5a) im Motorraum, die zweite Batterie (5b) vor der Hinterachse (13) und die dritte Batterie (5c) hinter der Hinterachse des Kraftfahrzeugs angeordnet ist.

3. Energieversorgungsanordnung nach Anspruch 2,
**dadurch gekennzeichnet, dass** die Batterien in der Reihenfolge erste Batterie (5a), dritte Batterie (5c) und zweite Batterie (5b) in Serie geschaltet sind und dass je ein Unterbrechungsschalter (6a, 6b) zwischen den Außenanschlüssen (4a, 4b) und der ersten Batterie (5a) beziehungsweise zweiten Batterie (5b) sowie zwei Unterbrechungsschalter (7a, 7c) in der Verbindung zwischen der ersten Batterie (5a) und der dritten Batterie (5c) angeordnet sind.

4. Elektrofahrzeug enthaltend einen elektrischen Antriebsmotor (2) mit einer Motorregelung (3),
**dadurch gekennzeichnet, dass** die Motorregelung (3) an eine Energieversorgungsanordnung (14) nach mindestens einem der Ansprüche 1 bis 3 gekoppelt ist.

5. Elektrofahrzeug nach Anspruch 4,
**dadurch gekennzeichnet, dass** dieses eine Abschalteinheit (20) aufweist, welche mit der Motorregelung (3) und den Unterbrechungsschaltern (6a, 6b, 7a, 7c) der Energieversorgungsanordnung (14) verbunden und so eingerichtet ist, dass die Abschalteinheit nach ihrem Auslösen zunächst die Motorregelung (3) veranlasst, die Stromentnahme aus der Energieversorgungsanordnung zu reduzieren, und dass diese anschließend die Unterbrechungsschalter der Energieversorgungsanordnung öffnet.

6. Elektrofahrzeug nach Anspruch 5,
**dadurch gekennzeichnet, dass** die Abschalteinheit (20) derart eingerichtet ist, dass diese zunächst einen zwischen einem Außenanschluss (4a) und der Spannungsquelle befindlichen Unterbrechungsschalter (6a) und anschließend die restlichen Unterbrechungsschalter (6b, 7a, 7c) öffnet.

7. Elektrofahrzeug nach einem der Ansprüche 5 oder 6,
**dadurch gekennzeichnet, dass** die Abschalteinheit (20) einen Trägheitsschalter (24) aufweist und derart eingerichtet ist, dass der Trägheitsschalter bei Auftreten einer überschwelligen Beschleunigung einen Stromkreis öffnet und hierdurch ein Signal an die Motorregelung (3) sendet sowie zeitverzögert ein erstes Relais (23) öffnet, wobei das Öffnen des ersten Relais einen ersten Unterbrechungsschalter (6a) der Energieversorgungsanordnung (14) sowie zeitverzögert ein zweites Relais (25) öffnet, wobei das Öffnen des zweiten Relais die übrigen Unterbrechungsschalter (6b, 7a, 7c) der Energieversorgungsanordnung (14) öffnet.

8. Verfahren zum Betreiben einer Energieversorgungsanordnung (14) nach mindestens einem der Ansprüche 1 bis 3,
**dadurch gekennzeichnet, dass** zunächst die Verbindung zwischen einem Außenanschluss (4a) der Energieversorgungsanordnung und einer ersten Batterie (5a) geöffnet wird und dass zeitverzögert weitere Verbindungen in der Serienschaltung der Batterien geöffnet werden.

## Claims

1. Electrical power supply arrangement (14) for a motor vehicle, containing two external terminals (4a, 4b) for making available a voltage (DC) from a voltage source, a circuit breaker (6a) being arranged between a first (4a) of the external terminals and the voltage source, **characterized in that** the voltage source being composed of at least two batteries (5a, 5b, 5c) connected in series, and **characterized in that** at least one further circuit breaker (6b, 7a, 7c) being arranged between the batteries and/or between the second external terminal (4b) and the batteries.

2. Power supply arrangement according to Claim 1, **characterized in that** it has three batteries (5a, 5b, 5c), the first battery (5a) being arranged in the motor/engine compartment, the second battery (5b) being arranged in front of the rear axle (13) and the third battery (5c) being arranged behind the rear axle of the motor vehicle.

3. Power supply arrangement according to Claim 2, **characterized in that** the batteries are connected in series in the sequence first battery (5a), third battery (5c) and second battery (5b), and **in that** in each case one circuit breaker (6a, 6b) is arranged between the external terminals (4a, 4b) and the first battery (5a) or second battery (5b), and two circuit breakers (7a, 7c) are arranged in the connection between the first battery (5a) and the third battery (5c), **characterized in that** the power supply arrangement according to (14) has two further external terminals (8, 9) between which the batteries (5a, 5b, 5c) are connected in series without a circuit breaker.

4. Electric vehicle containing an electric drive motor (2) with a motor regulator (3), **characterized in that** the motor regulator (3) is coupled to a power supply arrangement (14) according to at least one of Claims 1 to 3.

5. Electric vehicle according to Claim 4, **characterized in that** it has a switch-off unit (20) which is connected to the motor regulator (3) and to the circuit breakers (6a, 6b, 7a, 7c) of the power supply arrangement (14) and is designed in such a way that after it has been triggered the switch-off unit firstly causes the motor regulator (3) to reduce the power drain from the power supply arrangement, and that it subsequently opens the circuit breakers of the power supply arrangement.

6. Electric vehicle according to Claim 5, **characterized in that** the switch-off unit (20) is designed in such a way that it firstly opens a circuit breaker (6a) located between an external terminal (4a) and the voltage source and subsequently opens the remaining circuit breakers (6b, 7a, 7c).

7. Electric vehicle according to one of Claims 5 or 6, **characterized in that** the switch-off unit (20) has an inertia switch (24) and is designed in such a way that when an excessive acceleration occurs the inertia switch opens a circuit and as a result transmits a signal to the motor regulator (3) and opens a first relay (23) after a delay, the opening of the first relay opening a first circuit breaker (6a) of the power supply arrangement (14) and a second relay (25) after a delay, the opening of the second relay opening the other circuit breakers (6b, 7a, 7c) of the power supply arrangement (14).

8. Method for operating a power supply arrangement (14) according to at least one of Claims 1 to 3, **characterized in that** firstly the connection between an external terminal (4a) of the power supply arrangement and a first battery (5a) is opened, and **in that** further connections in the series circuit of the batteries are opened after a delay.

## Revendications

1. Dispositif d'alimentation en énergie électrique (14) pour un véhicule automobile, contenant deux bornes externes (4a, 4b) permettant de mettre à disposition une tension (DC) provenant d'une source de tension, un interrupteur (6a) étant disposé entre une première borne (4a) parmi les bornes externes et la source de tension, la source de tension se composant d'au moins deux batteries (5a, 5b, 5c) branchées en série et au moins un interrupteur (6b, 7a, 7c) supplémentaire étant disposé entre les batteries et/ou entre la deuxième borne externe (4b) et les batteries, **caractérisé en ce que** le dispositif d'alimentation en énergie (14) comporte deux bornes externes (8, 9) supplémentaires entre lesquelles les batteries (5a, 5b, 5c) sont branchées en série sans interrupteur.

2. Dispositif d'alimentation en énergie selon la revendication 1, **caractérisé en ce qu'**il comporte trois batteries (5a, 5b, 5c), la première batterie (5a) étant disposée dans le compartiment moteur, la deuxième batterie (5b) étant disposée devant l'essieu arrière (13) et la troisième batterie (5c) étant disposée derrière l'essieu arrière du véhicule automobile.

3. Dispositif d'alimentation en énergie selon la revendication 2, **caractérisé en ce que** les batteries sont branchées en série dans l'ordre première batterie (5a), troisième batterie (5c) et deuxième batterie (5b) et qu'un interrupteur (6a, 6b) est respectivement prévu entre les bornes externes (4a, 4b) et la première batterie (5a) et/ou la deuxième batterie (5b) ainsi que deux interrupteurs (7a, 7c) dans la liaison prévue entre la première batterie (5a) et la troisième batterie (5c).

4. Véhicule électrique contenant un moteur d'entraînement électrique (2) pourvu d'un système de régulation du moteur (3), **caractérisé en ce que** le système de régulation du moteur (3) est couplé à un dispositif d'alimentation en énergie (14) selon au moins l'une quelconque des revendications 1 à 3.

5. Véhicule électrique selon la revendication 4, **caractérisé en ce qu'**il comporte une unité de déconnexion (20) conçue et reliée de telle sorte au système de régulation du moteur (3) et aux interrupteurs (6a, 6b, 7a, 7c) du dispositif d'alimentation en énergie (14) que l'unité de déconnexion commande d'abord après son déclenchement le système de régulation du moteur (3), permettant de réduire le prélèvement de courant hors du dispositif d'alimentation en énergie, et que ce dernier ouvre ensuite les interrupteurs du dispositif d'alimentation en énergie.

6. Véhicule électrique selon la revendication 5, **caractérisé en ce que** l'unité de déconnexion (20) est conçue de façon à ouvrir d'abord un interrupteur (6a) se trouvant entre une borne externe (4a) et la source de tension puis les interrupteurs (6b, 7a, 7c) restants.

7. Véhicule électrique selon l'une quelconque des revendications 5 ou 6, **caractérisé en ce que** l'unité de déconnexion (20) comporte un contacteur à inertie (24) et est conçue telle sorte que le contacteur à inertie ouvre un circuit électrique en présence d'une accélération dépassant une valeur seuil et envoie ainsi un signal au système de régulation du moteur (3) et ouvre de façon décalée dans le temps un premier relais (23), l'ouverture du premier relais ouvrant un premier interrupteur (6a) du dispositif d'alimentation en énergie (14) ainsi que de façon décalée dans le temps un deuxième relais (25), l'ouverture du deuxième relais ouvrant les interrupteurs (6b, 7a, 7c) restants du dispositif d'alimentation en énergie (14).

8. Procédé pour faire fonctionner un dispositif d'alimentation en énergie (14) selon au moins l'une quelconque des revendications 1 à 3, **caractérisé en ce que** la liaison prévue entre une borne externe (4a) du dispositif d'alimentation en énergie et une première batterie (5a) est d'abord ouverte et que les autres liaisons prévues dans le circuit en série des batteries sont ensuite ouvertes de façon décalée dans le temps.
